(19) Europäisches Patentamt

European Patent Office

Office européen des brevets

(11) **EP 1 041 725 A2**

(12) **EUROPEAN PATENT APPLICATION**

(43) Date of publication:
04.10.2000 Bulletin 2000/40

(51) Int. Cl.⁷: **H04B 1/707**

(21) Application number: **00105951.8**

(22) Date of filing: **23.03.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **29.03.1999 JP 8598899**

(71) Applicant: **Toshiba Corporation**
**Kawasaki-shi, Kanagawa-ken (JP)**

(72) Inventor:
**Kirihara, Masaki,**
**Toshiba Kabushiki Kaiska**
**Minato-ku Tokyo 105-8001 (JP)**

(74) Representative: **HOFFMANN - EITLE**
**Patent- und Rechtsanwälte**
**Arabellastrasse 4**
**81925 München (DE)**

(54) **RAKE receiver**

(57)     The present invention provides a radio communication apparatus capable of executing the assignment of a reception path at a proper timing, thereby effectively using fingers and reducing the execution frequency of the synchronizing process to restrict the deterioration of the communication quality. A control section (8) sets a parameter of a reception path selection cycle to determine a reception path assignment cycle, at a predetermined timing concerning each of fingers (4), in accordance with an electric power of a signal in a reception path assigned to the finger (4), by assignment cycle setting means (8a). The control section (8) assigns a new reception path for each of the fingers (4), in accordance with the fact that from a time of the previous reception path assignment, the assignment cycle determined by the parameter set at the time by the assignment cycle setting means (8a) has passed.

FIG. 3

Printed by Xerox (UK) Business Services
2.16.7 (HRS)/3.6

**Description**

The present invention relates to a radio communication apparatus such as a mobile radio communication terminal apparatus used in a radio communication system such as a CDMA mobile radio communication system to which a spread spectrum system is applied.

In a mobile radio communication terminal apparatus used in the CDMA mobile radio communication system, for the purpose of preventing from disconnecting line during reception due to a movement of a user, multipath search is executed even during the reception, and a path (reception path) for despreading is selected from the search results to execute its assignment to each of a plurality of fingers (despreaders).

Such reception path assignment is repeated in a certain cycle during the communication. At this time, if the cycle of executing the assignment of the reception path is made longer, reception of the path having a lowered signal power is held for a comparatively long time. The information cannot be retrieved at a finger to which a path having a low and noisy reception level is assigned, and therefore, the limited fingers are wasted.

When the cycle of executing the assignment of the reception path is made shorter to solve this inconvenience, wasted fingers as mentioned above hardly exist, but a main path can easily be changed.

The main path is defined here as a reception path which has the largest signal power, of the receiving signals from base stations. Synchronization is made on the basis of the main path at the time of making communications with the base station. Therefore, when the main path is changed, synchronization with a new main path must be made. The signal power is unstable while the synchronization is newly made, and the communication quality is also deteriorated during this period.

That is, when the cycle of executing the assignment of the reception path is made shorter as described above, a deterioration of the communication quality may frequently occur.

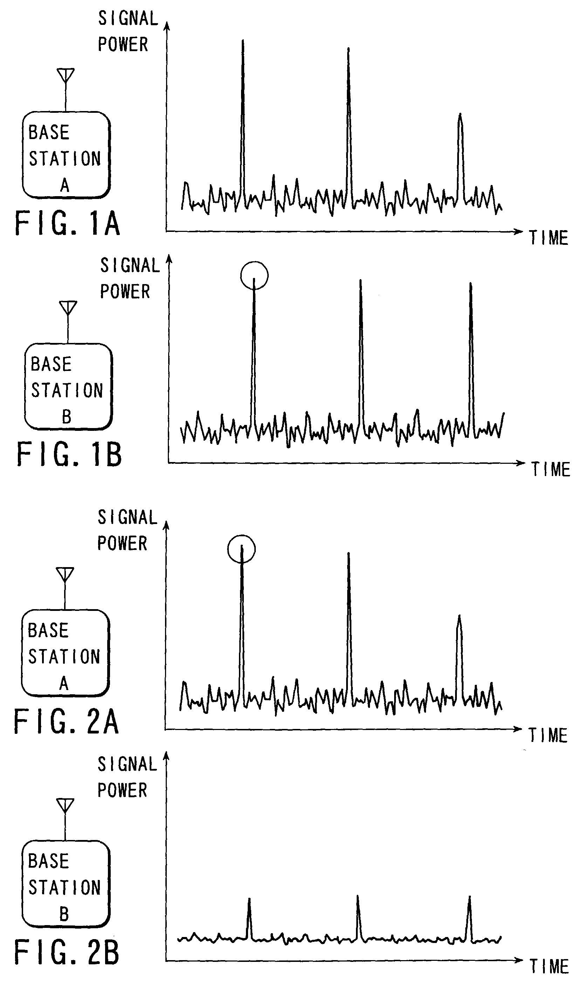

It is assumed that, for example, when the radio waves from two base stations A and B are received, the powers of the receiving signals from the base stations A and B are changed from the states represented in FIGS. 1A and 1B to those represented in FIGS. 2A and 2B where the radio wave from the base station B is shielded behind a building.

In the states shown in FIGS. 1A and 1B, a path whose power is maximum is included in the receiving signals from the base station B, and is regarded as the main path.

In the states shown in FIGS. 2A and 2B, however, the radio wave from the base station B is weak. As a result, the main path is changed to that of the base station A and the synchronization is made again.

In many cases, however, it is in a short time that the user enters the shadow of the building. When he goes out of the shadow, the power states return to those represented in FIGS. 1A and 1B and the main path is changed again to that of the base station B. At this time, also, the synchronization is made again and the synchronizing process is repeated.

As described above, the assignment of the reception path has been executed in a certain cycle. Therefore, when the communication conditions vary, the wasted fingers have occurred and thereby the communication quality might be deteriorated at one time, and repeating the synchronization might be often executed in accordance with the change of the main path and thereby the communication quality has been deteriorated at some time, because of the variation in.

The present invention has been accomplished in consideration of such a circumstance, and its object is to provide a radio communication apparatus capable of assigning a reception path at a proper timing, thereby effectively using fingers, and reducing the frequency in the execution of the synchronizing process and restricting the deterioration of the communication quality.

According to a first aspect of the present invention, there is provided a radio communication apparatus used for a radio communication system to which a spread spectrum scheme is applied, for despreading different reception path signals by a plurality of despreaders, respectively. The apparatus comprises: means for setting, as regards each of the plurality of despreaders, a reception path assignment cycle, in accordance with an electric power of a signal in a reception path assigned to the despreader, at a predetermined timing; and means for assigning a new reception path to each of the plurality of despreaders, in accordance with a fact that from the time of the previous reception path assignment, the assignment cycle which has been set at that time by the assignment cycle setting means has passed.

By providing these means, the cycle in which the reception path is assigned to each of the despreaders is set variably every time the assignment of the reception path is executed. The assignment cycle is set in accordance with the electric power of the signal in the reception path assigned to each of the despreaders at a predetermined timing immediately before the assignment.

Therefore, generally, it is possible to take measures that since the path having a large signal power can be kept in a state which is proper as the reception path, the reception path assignment cycle in which such a path is selected should be set to be long, and that reversely, since the path having a small signal power can be kept in a state which is improper as the reception path, the reception path assignment cycle in which such a path is selected should be set to be short. Thus, the radio communication apparatus according to the first aspect can assign a reception path at a proper timing, thereby effectively use fingers, and reduce the frequency in the execution of the synchronizing process and restrict the deterioration of the communication quality.

The radio communication system can be, for example, the CDMA mobile radio communication system, and the radio communication apparatus may be a mobile radio communication terminal apparatus or a base station.

According to a second aspect of the present invention, the radio communication apparatus further comprises signal power history storing means for storing main reception path signal powers at a predetermined number of the predetermined timings in a previous time, as signal power histories, besides the structure according to the first aspect of the present invention. The assignment cycle setting means sets the same assignment cycle as the previous one, as for the despreader to which the main reception path is assigned, when a difference between an average value of the signal power histories of main reception path stored in the signal power history storing means and an average value of signal powers of other reception paths exceeds a predetermined threshold value. The signal power history storing means may be constituted by, for example, signal power history generating means or a signal power history memory.

By providing these means, an average value of main reception path signal powers at a predetermined number of previous predetermined timings is taken, and a value which smoothly varies while reflecting the variation in the main reception path signal powers can be obtained. Then, the assignment cycle concerning the despreader to which the main reception path is assigned is set to be the same as the previous one until such an average value is small enough to approach an average value of the signal power of the other reception path.

Therefore, even if the signal power of the main reception path is temporarily lowered for the reason that the main reception path temporarily enters a shadow of the building, such a lowering signal power is not used for setting of the reception path assignment cycle. For this reason, in the radio communication apparatus according to the second aspect, the main reception path can be prevented from being out of the reception path for the reason that, for example, the main reception path temporarily enters a shadow of the building and its signal power is temporarily lower, and unnecessary change of the main reception path can be prevented from being repeated.

According to a third aspect of the present invention, there is provided a spread spectrum radio communication apparatus for despreading different reception path signals by a plurality of despreaders, respectively. The spread spectrum radio communication apparatus comprises: means for setting a reception path assignment cycle, as regards each of the plurality of despreaders, in accordance with an electric power of a signal in a reception path assigned to the despreader; and means for assigning a new reception path, in accordance with the fact that the assignment cycle set by the assignment cycle setting means has passed, as regards each of the plurality of despreaders.

The assignment cycle setting means may comprises: means for measuring the electric power of the signal in the reception path assigned to the despreader, at a predetermined timing; and means for setting the reception path assignment cycle, in accordance with the electric power of the signal in the reception path assigned to the despreader, when the assignment cycle of the despreader has passed.

It is preferable that the assignment cycle setting means sets the reception path assignment cycle in proportion to the electric power of the reception path signal.

According to a fourth aspect of the present invention, there is provided a radio communication apparatus used for a radio communication system to which a spread spectrum scheme is applied, for despreading a predetermined reception path by a despreader (finger). This radio communication apparatus comprises: speed information obtaining means for obtaining predetermined speed information concerning a moving speed of the radio communication apparatus; means for setting a reception path assignment cycle, in accordance with the speed information obtained by the speed information obtaining means, at a predetermined timing, as regards the despreader; and means for assigning a new reception path to the despreader, in accordance with a fact that from the time of the previous reception path assignment, the assignment cycle which has been set at that time by the assignment cycle setting means has passed.

By providing these means, the cycle in which the reception path is assigned to each of the despreaders is set variably every time the assignment of the reception path is executed. The assignment cycle is set in accordance with the moving speed of the radio communication apparatus.

Therefore, it is possible to take measures that when the moving speed is high the reception path assignment cycle should be short since the variation in the state of the path becomes large and a proper path as the reception path can be varied, and that, reversely, when the moving speed is low the reception path assignment cycle should be long since the variation in the state of the path becomes small and a proper path as the reception path is hardly varied. Thus, the radio communication apparatus according to the fourth aspect can effectively use fingers, and reduce the frequency in the execution of the synchronizing process and restrict the deterioration of the communication quality.

The radio communication system can be, for example, the CDMA mobile radio communication system, and the radio communication apparatus may be a mobile radio communication apparatus or a base station.

The speed information obtaining means may measure a hand-over execution interval and the rate of variation in the transmission power and, generate the information representing the measurement result as the speed information. The speed information obtaining means may generate the speed information on the basis of speed data obtained from a vehicle on which the radio communication apparatus is mounted.

According to a fifth aspect of the present invention, the radio communication apparatus further comprises hand-over history storing means for storing a variation in a hand-over destination as a hand-over history, besides the structure of the radio communication apparatus according to the fourth aspect of the present invention. The assignment cycle setting means determines whether the apparatus moves back and forth between two hand-over destinations or not, on the basis of the hand-over history stored in the hand-over history storing means, and sets the assignment cycle regardless of the speed information when the apparatus moves back and forth between the two hand-over destinations.

By providing these means, when the moving speed is determined in accordance with the hand-over execution interval, if the relationship between the hand-over execution interval and the moving speed is broken due to the fact that the hand-over interval becomes shorter since the apparatus moves back and forth between two hand-over destinations, the assignment cycle can be properly set, not based on the hand-over execution interval.

In such a case, the same assignment cycle as the previous one may be set or, for example, a predetermined assignment cycle such as the maximum assignment cycle may be set.

This summary of the invention does not necessarily describe all necessary features so that the invention may also be a sub-combination of these described features.

The invention can be more fully understood from the following detailed description when taken in conjunction with the accompanying drawings, in which:

FIGS. 1A and 1B are diagrams showing states of receiving signal powers in a mobile radio communication terminal apparatus where no shielding objects exist between the apparatus and base station A or B;

FIGS. 2A and 2B are diagrams showing states of receiving signal powers in a mobile radio communication terminal apparatus where a shielding object exists between the apparatus and the base station B;

FIG. 3 is a block diagram showing a configuration of essential parts of a receiving system in the mobile radio communication terminal apparatus to which the radio communication apparatus according to the first embodiment of the present invention is applied;

FIG. 4 is a flow chart showing processing steps of a control section 8 in an assignment cycle setting process in the first embodiment of the present invention;

FIG. 5 is a flow chart showing the processing steps of the control section 8 in a reception pass assignment process in the first embodiment of the present invention;

FIG. 6 is a block diagram showing a configuration of essential parts of a receiving system in the mobile radio communication terminal apparatus to which the radio communication apparatus according to a second embodiment of the present invention is applied;

FIG. 7 is a flow chart showing processing steps of a control section 12 in an assignment cycle setting process in the second embodiment of the present invention;

FIG. 8 is a block diagram showing a configuration of essential parts of a receiving system in the mobile radio communication terminal apparatus to which the radio communication apparatus according to a third embodiment of the present invention is applied; and

FIG. 9 is a flow chart showing processing steps of a control section 22 in an assignment cycle setting process in the third embodiment of the present invention.

Several embodiments of the present invention will be explained below with reference to the drawings.

(First Embodiment)

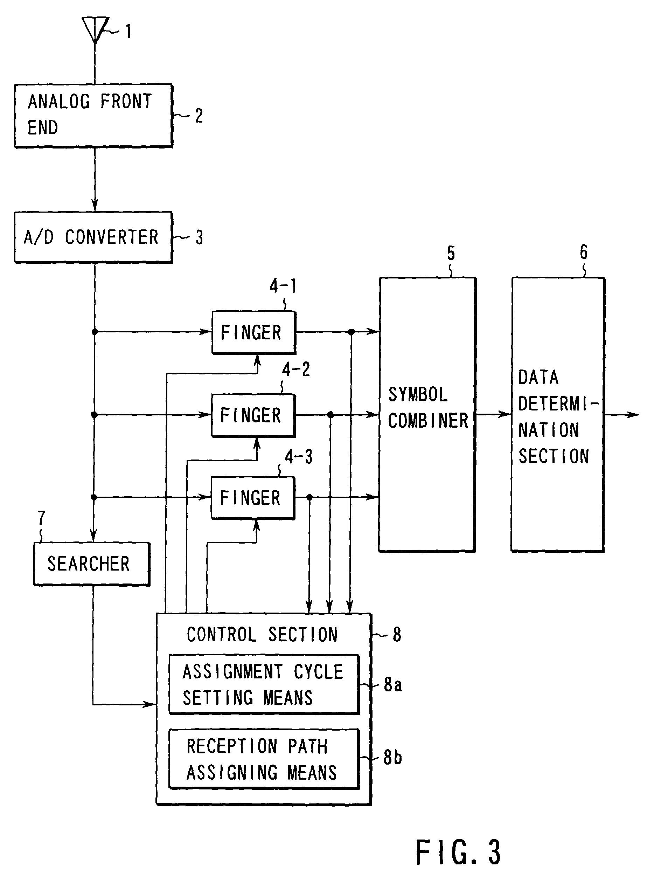

FIG. 3 is a block diagram showing a configuration of essential parts of a receiving system in the mobile radio communication terminal apparatus to which the radio communication apparatus according to the first embodiment of the present invention is applied.

The mobile radio communication terminal apparatus is designed to be used for the CDMA mobile radio communication system, to implement the mobile communication by making communication with a base station (not shown) in the CDMA scheme.

As shown in this drawing, the mobile radio communication terminal apparatus according to the present embodiment comprises an antenna 1, an analog front end 2, an A/D converter 3, fingers (despreaders) 4 (4-1, 4-2 and 4-3), a symbol combiner 5, a data determination section 6, a searcher 7 and a control section 8.

A radio signal received by the antenna 1 is low-noise-amplified and frequency-converted to the base band by the analog front end 2.

The reception signal of the base band obtained at the analog front end 2 is sampled at a predetermined sampling rate by the analog/digital (A/D) converter 3. The reception signals sampled by the A/D converter 3 are input to three fingers 4 (4-1, 4-2 and 4-3) and the searcher 7 respectively.

The fingers 4 spectrum-despread and demodulate the transmission data that is transmitted from the base station. The fingers 4 execute the demodulation in relation to the reception path assigned by the control section 8, of the plural paths.

Each of the symbol data demodulated by the fingers 4 is input to the symbol combiner 5 together with the synchronization information. The symbol combiner 5 combines integral outputs of the reception signal that are output from the respective fingers 4, reproduces the data components, and supplies the reproduced data components to the data determination section 6.

The data determination section 6 reproduces the reception data by determining the level of the reproduced data components.

The searcher 7, which executes the PN search of the pilot signals transmitted at any time from the base stations, has basically the same structure as that of the fingers 4. The power information obtained from the PN search of the searcher 7 is supplied to the control section 8 to be used to search for the path whose power is large, i.e. the path which should be the reception path.

The control section 8 has, for example, a microprocessor as a main control circuit and totally controls each section to implement the operations of the mobile radio communication terminal apparatus. The control section 8 has assignment cycle setting means 8a and reception path assigning means 8b as well as the well-known processing means for implementing the function which the conventional mobile radio communication terminal apparatus has.

The assignment cycle setting means 8a sets cycles for assignment of reception paths to the fingers 4, respectively, in response to the signal powers of each outputs of the fingers 4.

The reception path assigning means 8b selects the reception paths and sets them for the fingers 4, in accordance with the power information obtained at the searcher 7. The reception path assigning means 8b executes the reception path assigning processing in the cycles which are set by the assignment cycle setting means 8a.

The control section 8 exchanges a number of control signals with each section to control them. FIG. 3 shows only a part of the control section 8 relating to the present invention, and omits the other parts thereof.

Next, the operations of the mobile radio communication terminal apparatus constituted as described above will be explained.

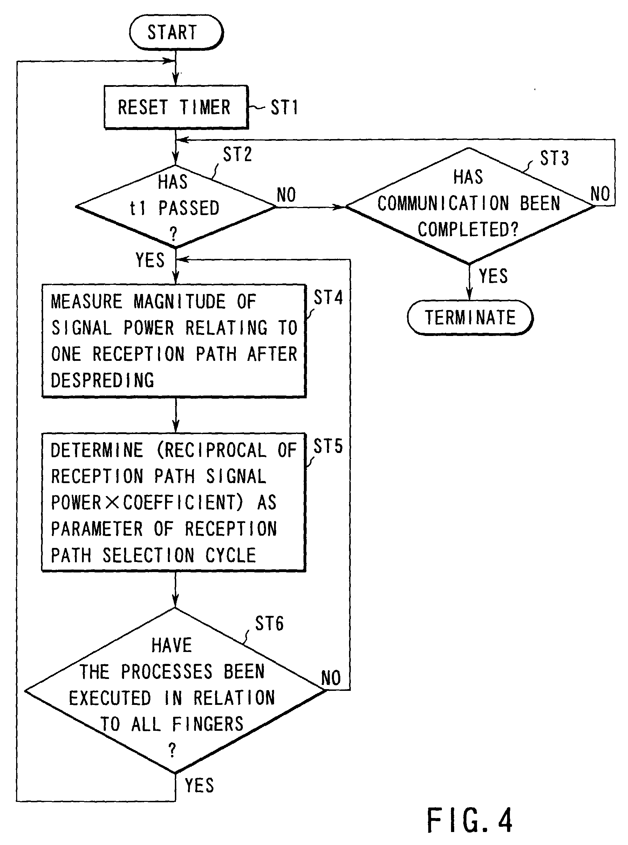

When the communication is started, the assignment cycle setting means 8a of the control section 8 executes the assignment cycle setting process as illustrated in FIG. 4.

In this assignment cycle setting process, the control section 8 first resets a timer (not shown) to count cycle t1 in which the assignment cycle is to be set and starts counting (step ST1).

After that, the control section 8 waits that t1 has passed or that the communication has completed (steps ST2 and ST3).

When the communication has completed before passing of t1, the control section 8 terminates the current assignment cycle setting process.

However, when t1 has passed while the communication is kept, the control section 8 verifies the output of any one of fingers 4 and measures the electric power of the signal in the reception path currently assigned to the finger 4 (step ST4).

Subsequently, the control section 8 sets a value obtained from the following equation:

$$\text{Reciprocal of the Measured Reception Path Signal Power} \times \text{Coefficient}$$

as a cycle parameter for the reception path selection relating to the finger 4 (step ST5). That is, the cycle parameter of the reception path selection is set to be a smaller value, as the measured reception path signal power is larger, i.e. as the reception path condition is better.

When the processes of the steps ST4 and ST5 have completed, the control section 8 determines whether the processes have been executed in relation to all the fingers 4 or not (step ST6), and then executes the processes of the steps ST4 and ST5 while changing the fingers 4 on interest until completing the processes relating all the fingers 4.

When the control section 8 has completed the processes relating to all the fingers 4, the control section 8 returns to step ST1 to repeat the above-mentioned processes.

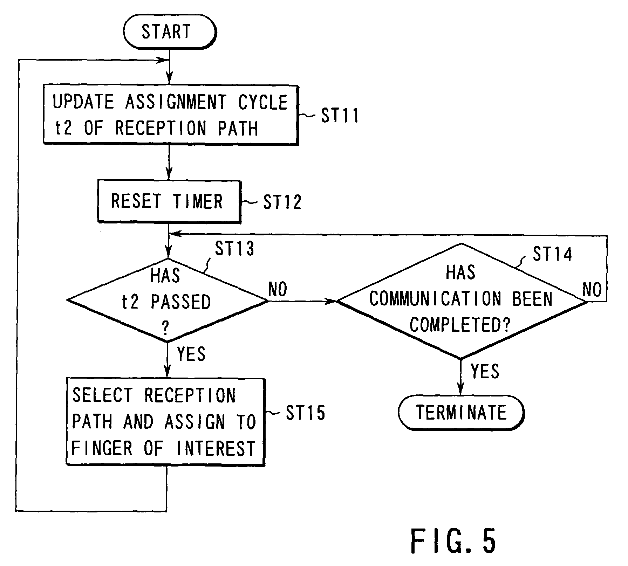

When the communication is started, the control section 8 executes the reception path assigning process as illustrated in FIG. 5 by the reception path assigning means 8b, in addition to the above-described assignment cycle setting process. The reception path assigning process is executed separately and parallel for each of the fingers 4.

In this reception pass assigning process, the control section 8 first updates assignment cycle t2 of the reception path concerning the finger 4 (hereinafter called the finger of interest) to which the reception path is to be assigned, by considering the parameter which is set for the finger of interest in the above-described assignment cycle setting process (step ST11). The assignment cycle t2 is set to be longer as the parameter is smaller. Therefore, the assignment cycle t2 is set to be longer as the finger of interest receives a larger path of the signal power when the previous assignment cycle setting process is executed.

Subsequently, the control section 8 resets the timer for counting the assignment cycle t2 and starts the counting (step ST12).

After that, the control section 8 waits that the assignment cycle t2 has passed or that the communication has been completed (steps ST13 and ST14).

When the communication has been completed before the passing of the assignment cycle t2, the control section 8 terminates the current reception path assigning process.

However, when assignment cycle t2 has been passed while the communication is kept, the control section 8 determines the path having the largest signal power, of the paths which are not assigned to the other fingers 4 and the path of the finger of interest by referring to the power information supplied from the searcher 7, and assigns this path to the finger of interest as the reception path (step ST15).

After that, the control section 8 returns to step ST11 and repeats the above-described process.

According to the present embodiment, as described above, the assignment of the reception path to each finger 4 is executed at the different timing. Every time the assignment of the reception path is executed, the cycle in the assignment of the reception path is set to be longer as the signal power of the reception path at the time of executing the assignment cycle setting process immediately before the assignment of the reception path becomes larger.

That is, there is small possibility that the path having a strong signal power at the time of reception may be improper as the reception path and, the cycle of assignment of the fingers 4 caused by the selection of the reception path is set to be longer. Therefore, even if the signal power is lowered only in a short time because of the shadow of the building, the possibility of excluding the major path such as the main path out of the assignment of the fingers 4 will be lowered. For this reason, frequent change of the main path can be prevented and the deterioration of the communication quality caused by remaking the synchronization can be restricted to a smaller one.

Reversely, the cycle in the assignment of the fingers 4 caused by the reception path selection is made shorter since there is a high possibility that the path having a small signal power at the time of reception may be improper as the reception path. Therefore, the process of selecting the path having a larger signal power is frequently executed under the condition that the path having a small signal power has to be set as a reception path, and the path whose signal power is so lowered that the effective information cannot be obtained, can be prevented from remaining assigned to the fingers 4. For this reason, each finger 4 can be effectively operated to retrieve the effective information at any time, and thereby the communication quality can be improved.

(Second Embodiment)

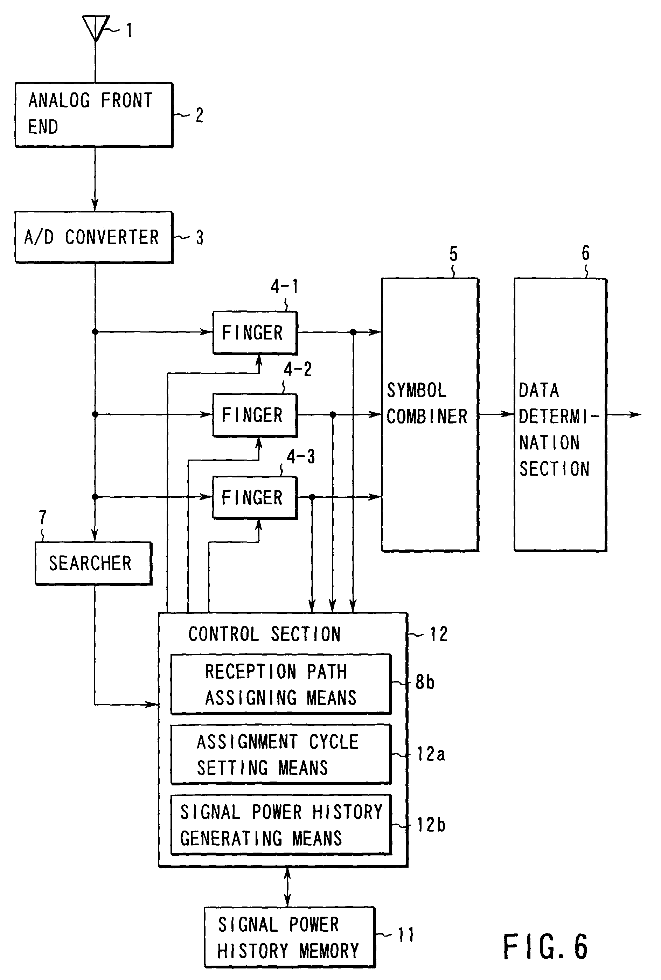

FIG. 6 is a block diagram showing a configuration of essential parts of a receiving system in the mobile radio communication terminal apparatus to which the radio communication apparatus according to a second embodiment of the present invention is applied. The same portions as those of the mobile radio communication terminal apparatus according to the first embodiment shown in FIGS. 1A and 1B are denoted by the same reference numerals and their detailed explanations are omitted.

This mobile radio communication terminal apparatus is used for the CDMA mobile radio communication system, and implements the mobile communication by making communication with a base station (not shown) in the CDMA scheme.

As shown in this figure, the mobile radio communication terminal apparatus of the present embodiment comprises the antenna 1, the analog front end 2, the A/D converter 3, the fingers 4 (4-1, 4-2 and 4-3), the symbol combiner 5, the data determination section 6, the searcher 7, a signal power history memory 11 and a control section 12.

That is, in the mobile radio communication terminal apparatus of the present embodiment, the control section 12 is provided in place of the control section 8 in the mobile radio communication terminal apparatus of the first embodiment, and the signal power history memory 11 is added.

The signal power history memory 11 stores the signal power history generated by the control section 12.

The control section 12 has, for example, a microprocessor as a main control circuit, and totally controls each section to implement the operations of the mobile radio communication terminal apparatus. The control section 12 comprises reception path assigning means 8b, assignment cycle setting means 12a and signal power history forming means 12b in addition to the well-known processing means for implementing the function which a conventional mobile radio communication terminal apparatus has.

That is, in the control section 12, the assignment cycle setting means 12a is provided in place of the assignment cycle setting means 8a in the control section 8 of the first embodiment, and signal power history generating means 12b is added.

The assignment cycle setting means 12a sets the cycle for the assignment of the main path in response to a signal power history stored in the signal power history memory 11 and the signal power of the reception paths other than the main path. Further, the assignment cycle setting means 12a sets the cycle for the assignment of the reception paths other than the main path in response to the signal power of each reception path.

The signal power history generating means 12b generates the signal power history representing an N number of latest signal power measurement results relating to the main path, and writes it in the signal power history memory 11.

The control section 12 exchanges a number of control signals with each section to control them. FIG. 6 illustrates only a part of the present invention and omits the other portions thereof.

Next, the operations of the mobile radio communication terminal apparatus constituted as described above will be explained.

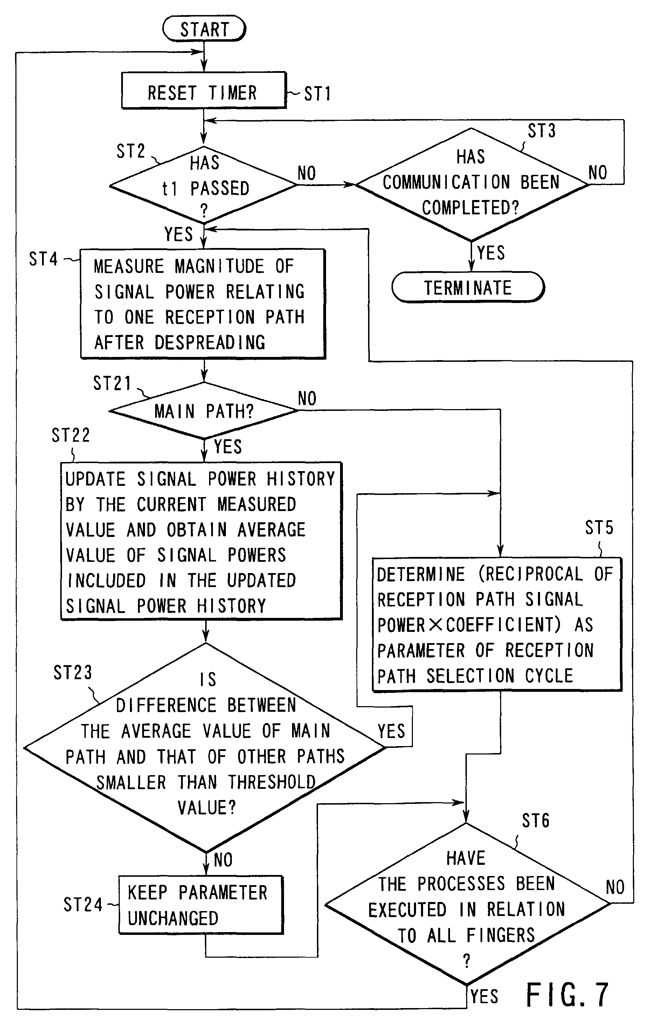

When the communication is started, the control section 12 executes the assignment cycle setting process as shown in FIG. 7.

The assignment cycle setting process of the present embodiment is a process produced by partially modifying the assignment cycle setting process of the first embodiment, and the steps of the same processes are denoted by the same reference numerals. The processes different from those of the assignment cycle setting process of the first embodiment will be explained here.

That is, the control section 12 measures the electric power of the signal in the reception path which is currently assigned to any one of the fingers 4 at step ST4, and determines whether the reception path whose signal power has been measured is the main path or not (step ST21).

When the reception path whose signal power has been measured is not the main path, the control section 12 sets a value obtained from the following equation:

$$\text{Reciprocal of the Measured Reception Path Signal Power} \times \text{Coefficient}$$

as a cycle parameter for the reception path selection relating to the finger 4, at step ST5, similarly to the first embodiment. However, when the reception path whose signal power has been measured is the main path, the control section 12 updates the signal power history stored in the signal power history memory 11 so that the signal power history includes the currently measured signal power, and obtains an average value of an N number of signal powers included in the updated signal power history (step ST22).

Subsequently, the control section 12 determines whether or not the difference between the average value obtained at step ST22 and an average value of signal powers of other paths is smaller than a predetermined threshold value (step ST23).

When the difference between the average value obtained at step ST22 and an average value of signal powers of the other paths is smaller than a predetermined threshold value, the control section 12 sets a value obtained from the following equation:

$$\text{Reciprocal of the Measured Reception Path Signal Power} \times \text{Coefficient}$$

as a parameter for the reception path selection cycle relating to the finger 4, at step ST5, similarly to the first embodiment.

However, when the difference between the average value obtained at step ST22 and the average value of signal powers of the other paths is equal to more than the predetermined threshold value, the control section 12 keeps the parameter for the reception path selection cycle relating to the finger 4, unchanged as the value which has been previously set (step ST24).

After setting the parameter of the reception path selection cycle at steps ST5 or ST24, the control section 12 executes the processes after step ST6, similarly to the first embodiment.

In the above assignment cycle setting process, the update of the signal power history at step ST22 is executed by the signal power history generating means 12b and the other processes are executed by the assignment cycle setting means 12a.

The reception path assigning process is executed similarly to the first embodiment.

Thus, according to the present embodiment, every time the assignment of the reception path is executed, the cycle in the assignment of the reception path is set to be longer as the signal power of the reception path in the assignment cycle setting process which is executed immediately before the assignment becomes larger, in the basically similar manner to that of the first embodiment.

In the present embodiment, concerning the main path, however, the cycle in the assignment of the reception path is set to be the same as the cycle which has been previously set, regardless of a current signal power measurement result, unless the difference between an average value of an N number of latest signal power measurement results and an average value of the signal powers of all other paths is smaller than a predetermined threshold value.

Even if a few number of signal powers, of the N number of latest signal powers, are lowered rather than the others, the lowering degree of the average value of the N number of signal power measurement results becomes smaller. Therefore, even if the signal power is lowered in a short time in a circumstance such as a shadow of the building, the average value of the N number of latest signal power measurement results is not remarkably lowered, and the cycle in the assignment of the reception path is set to be the same as the cycle which has been set at the previous time.

In the first embodiment, if the reception path assigning process concerning the finger 4 to which the main path is assigned is executed while lowering of the signal power in a short time occurs in the main path due to the circumstance such as a shadow of a building, the cycle in the assignment of the reception path is set to be shorter. In the present embodiment, in such a circumstance, however, the cycle in the assignment of the reception path can be kept long at the finger 4 to which the main path is assigned.

For this reason, frequent change of the main path can be certainly prevented, and deterioration of the communication quality caused by remaking the synchronization can be restricted to a small extent.

(Third Embodiment)

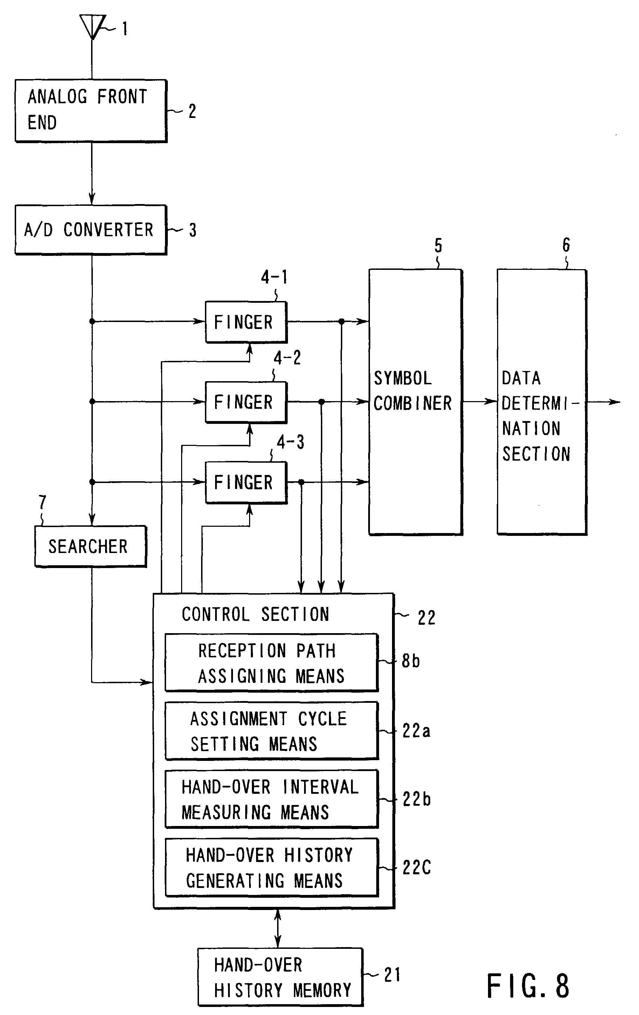

FIG. 8 is a block diagram showing a configuration of essential parts of a receiving system in the mobile radio communication terminal apparatus to which the radio communication apparatus according to a third embodiment of the present invention is applied. The same portions as those of the mobile radio communication terminal apparatus according to the first embodiment shown in FIG. 3 are denoted by the same reference numerals and their detailed explanations are omitted.

This mobile radio communication terminal apparatus is used for the CDMA mobile radio communication system, and implements the mobile communication by making communication with a base station (not shown) in the CDMA scheme.

As shown in this figure, the mobile radio communication terminal apparatus of the present embodiment comprises the antenna 1, the analog front end 2, the A/D converter 3, the fingers 4 (4-1, 4-2 and 4-3), the symbol combiner 5, the data determination section 6, the searcher 7, a hand-over history memory 21 and a control section 22.

That is, in the mobile radio communication terminal apparatus of the present embodiment, the control section 22 is provided in place of the control section 8 in the mobile radio communication terminal apparatus of the first embodiment, and the hand-over history memory 21 is further added.

The hand-over history memory 21 stores a hand-over interval measured by the control section 22 and a hand-over history generated by the control section 22.

The control section 22 has, for example, a microprocessor as a main control circuit, and totally controls the each section to implement the operations of the mobile radio communication terminal apparatus. The control section 22 comprises the reception path assigning means 8b, assignment cycle setting means 22a, hand-over interval measuring means 22b and hand-over history generating means 22c in addition to the well-known processing means for implementing the function which the conventional mobile radio communication terminal apparatus has.

That is, in the control section 22, the assignment cycle setting means 22a is provided in place of the assignment cycle setting means 8a of the control section 8 of the first embodiment, and the hand-over interval measuring means 22b and hand-over history generating means 22c are further added.

The assignment cycle setting means 22a sets the cycle in the assignment of the reception path for each finger 4, to each finger 4, in response to the hand-over interval and the hand-over history which are stored in the hand-over history memory 21.

The hand-over interval measuring means 22b measures a time interval between the latest hand-over as executed and a hand-over which has been executed before the latest hand-over, and writes the time interval in the hand-over history memory 21.

The hand-over history generating means 22c generates a hand-over history representing a hand-over destination in each of an M number of latest hand-overs, and writes them in the hand-over history memory 21.

The control section 22 exchanges a number of control signals with the respective sections to control them. FIG. 8 illustrates only a part of the control section 22 according to the present invention and omits the other portions.

Next, the operations of the mobile radio communication terminal apparatus constituted as described above will be explained.

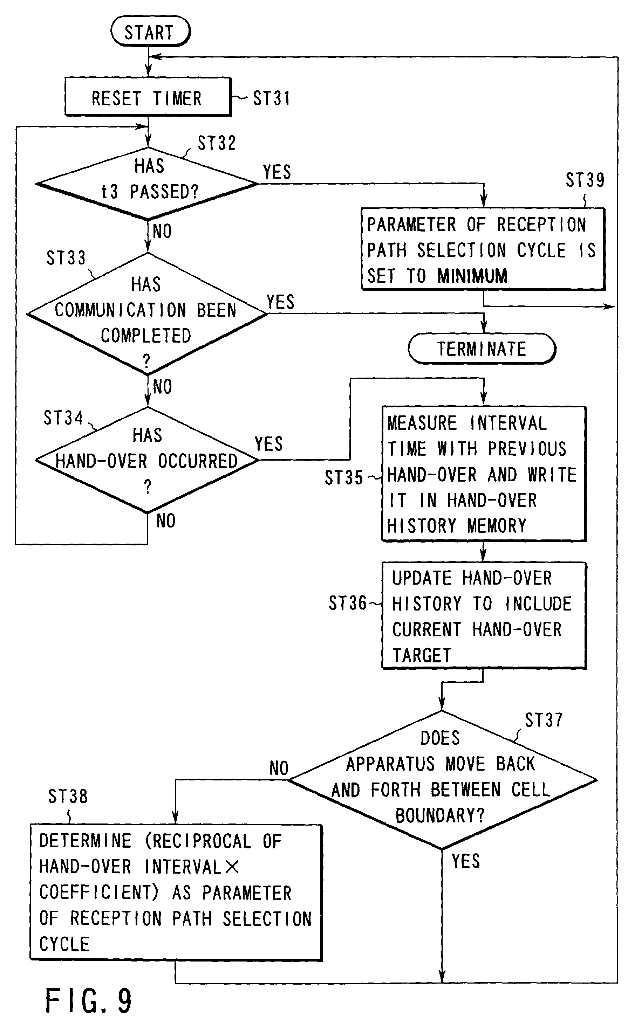

When the communication is started, the control section 22 executes the assignment cycle setting process as illustrated in FIG. 9.

That is, in this assignment cycle setting process, the control section 22 first resets a timer for counting time t3 that is preset as a hand-over wait limit time (step ST31).

After that, the control section 22 waits that the time t3 has passed, the communication has been completed or the hand-over has occurred (steps ST32 to ST34).

When the communication has been completed, the control section 22 terminates the current assignment cycle setting process.

However, when the hand-over has occurred, the control section 22 measures an interval time between the hand-over and the previous hand-over, and writes it in the hand-over history memory 21 (step ST35). In addition, the control section 22 updates the hand-over history stored in the hand-over history memory 21 so that the hand-over history memory 21 includes the current hand-over destination (step ST36).

Subsequently, the control section 22 determines whether the mobile radio communication terminal apparatus moves back and forth across the cell boundary or not by referring to the updated hand-over history (step ST37).

When, for example, a latest hand-over destination represented in the hand-over history is the same as the last hand-over destination but two, the control section 22 determines that the mobile radio communication terminal apparatus moves back and forth across the cell boundary. In this case, the control section 22 returns to step ST31 while keeping the parameter of the reception path selection cycle as the value which has been set.

On the other hand, when the control section 22 determines that the mobile radio communication terminal apparatus does not move back and forth across the cell boundary, the control section 22 sets a value obtained from the following equation:

Reciprocal of the hand-over interval time stored in the hand-over history memory 21 × Coefficient

as the parameter of the reception path selection cycle relating to each finger 4 (step ST38).

That is, in this case, the parameter of the reception path selection cycle is set to a larger value as the hand-over interval time is shorter. The hand-over interval time may get shorter as the moving speed of the mobile radio communication terminal apparatus is higher. Therefore, it can be considered that the parameter of the reception path selection cycle is set to a larger value as the moving speed of the mobile radio communication terminal apparatus is higher.

When the control section 22 determines that the time t3 has passed without occurrence of the hand-over at step ST32, the control section 22 sets the parameter of the reception path selection cycle to be a predetermined minimum value (step ST39).

When the setting of the parameter of the reception path selection cycle has been terminated, the control section 22 returns to step ST31 and repeats the above-described processes.

In the above assignment cycle setting process, step ST35 is executed by the hand-over interval measuring means 22b, step ST36 is executed by the hand-over history generating means 22c, and the other processes are executed by the assignment cycle setting means 22a.

The reception path assigning process is executed in the same manner as that of the first embodiment.

Thus, according to the present embodiment, every time the reception path assignment is executed, the cycle in the assignment of the reception path is set to be smaller as the moving speed of the mobile radio communication terminal apparatus in the assignment cycle setting process that has been executed immediately before the assignment gets higher.

For this reason, when the mobile radio communication terminal apparatus moves at a high speed, the path condition is radically varied. Therefore, the path having a larger signal power can be always set as the reception path in accordance with the radical variation of the path condition, by setting the cycle in the assignment of the reception path to be short. As a result, each of the fingers 4 can be efficiently functioned to retrieve the effective information at any time and the communication quality can be thereby improved.

On the other hand, when the mobile radio communication terminal apparatus moves at a low speed, the path condition is not so varied. Therefore, the frequent change of the main path can be prevented by setting the cycle in the assignment of the reception path to be long, and the deterioration in the communication quality caused by remaking the synchronization can be restricted to a small extent.

The hand-over interval time gets shorter though the moving speed is low, under the condition that the mobile radio communication terminal apparatus moves back and forth across the cell boundary.

According to the present embodiment, however, the hand-over destination history is taken, the state of the mobile radio communication terminal apparatus moving back and forth across the cell boundary is determined in response to the history, and the cycle in the assignment of the reception path is set not to be varied under such a state. For this reason, the cycle in the assignment of the reception path can be prevented from being set to be short regardless of little variation in the path under the above-described state.

The present invention is not limited to the above-described embodiments. In each of the embodiments, for example, the parameter of the reception path selection cycle is set in advance in the assignment cycle setting process, and the cycle in the assignment of the reception path is set by considering the parameter that has been set at the time of assigning the reception path in the reception pass assigning process. However, the process of directly setting the cycle in the assignment of the reception path may be executed in place of the assignment cycle setting process.

In addition, in each of the embodiments, the radio communication apparatus of the present invention is applied to the mobile radio communication terminal apparatus. However, it can also be applied to a radio base station.

Further, in each of the embodiments, the mobile radio communication terminal apparatus comprises three fingers 4. However, the number of fingers may be arbitrarily plural.

Further, in each of the embodiments, the cycle in the reception path selection is varied in proportion to the reception path signal power and the hand-over interval time. However, the cycle may be varied in accordance with a certain function or the relationship between the cycle in the reception path selection and the reception path signal power or the hand-over interval time may be set on the basis of experiment data or the like.

In the third embodiment, the hand-over interval time is measured as the moving speed information. However, the moving speed information may be measured in other methods, for example, in a measuring method based on the rate of variation in the transmission power under the transmission power control to make the signal power constant at the radio base station. Otherwise, the speed information may be obtained in a method of, for example, receiving vehicle speed information from a vehicle on which the apparatus is mounted.

Further, in the third embodiment, when the apparatus moves between two cells, the cycle in the reception path selection is kept to be a value which has been previously set. However, the cycle in the reception path selection can be varied to an arbitrary value, for example, a maximum value from the viewpoint that the variation in the path is small since the apparatus moves in a very small range.

## Claims

1. A radio communication apparatus used for a radio communication system to which a spread spectrum scheme is applied, for despreading different reception path signals by a plurality of despreaders (4), respectively,

   said apparatus comprising:
   means (8a, 12a) for setting, as regards each of said plurality of despreaders (4), a reception path assignment cycle, in accordance with an electric power of a signal in a reception path assigned to the despreader (4), at a predetermined timing; and
   means (8b) for assigning a new reception path to each of said plurality of despreaders (4), in accordance with a fact that from the time of the previous reception path assignment, the assignment cycle which has been set at the time by said assignment cycle setting means has passed.

2. A radio communication apparatus according to claim 1, characterized in that said assignment cycle setting means (8a, 12a) sets the reception path assignment cycle in proportion to said electric power.

3. A radio communication apparatus according to claim 1, characterized in that said assignment cycle setting means (8a, 12a) sets the reception path assignment cycle to be longer as said electric power is larger.

4. A radio communication apparatus according to claim 1, characterized by further comprising signal power history storing means (11, 12b) for storing main reception path signal powers at a predetermined number of said predetermined timings in a previous time, as signal power histories,

   wherein said assignment cycle setting means (12a) sets the same assignment cycle as the previous one, as for said despreader (4) to which the main reception path is assigned, when a difference between an average value of the signal power histories of main reception path stored in said signal power history storing means and an average value of signal powers of other reception paths exceeds a predetermined threshold value.

5. A radio communication apparatus according to claim 4, characterized in that said signal power history storing means (11, 12b) includes a signal power history memory (11) for storing an N number of latest signal power histories.

6. A radio communication apparatus according to claim 4, characterized in that said assignment cycle setting means (8a, 12a) sets the reception path assignment cycle in proportion said electric power.

7. A radio communication apparatus according to claim 4, characterized in that said assignment cycle setting means (8a, 12a) sets the reception path assignment cycle to be longer as said electric power is larger.

8. A spread spectrum radio communication apparatus for despreading different reception path signals by a plurality of despreaders (4), respectively,

   said apparatus comprising:
   means (8a, 12a) for setting a reception path assignment cycle, as regards each of said plurality of despreaders (4), in accordance with an electric power of a signal in a reception path assigned to the despreader (4); and
   means (8b) for assigning a new reception path, in accordance with the fact that the assignment cycle set by said assignment cycle setting means has passed, as regards each of said plurality of despreaders (4).

9. A radio communication apparatus according to claim 8, characterized in that said assignment cycle setting means (8a, 12a) comprises:

means for measuring said electric power of the signal in the reception path assigned to the despreader (4), at a predetermined timing; and
means for setting the reception path assignment cycle, in accordance with said electric power of the signal in the reception path assigned to the despreader (4), when the assignment cycle of the despreader (4) has passed.

10. A radio communication apparatus according to claim 8, characterized in that said assignment cycle setting means (8a, 12a) sets the reception path assignment cycle in proportion to said electric power.

11. A radio communication apparatus according to claim 8, characterized in that said assignment cycle setting means (8a, 12a) sets the reception path assignment cycle to be longer as said electric power is larger.

12. A radio communication apparatus used for a radio communication system to which a spread spectrum scheme is applied, for despreading a predetermined reception path by a despreader (4),

said apparatus comprising:
speed information obtaining means (22b, 22c) for obtaining predetermined speed information concerning a moving speed of the radio communication apparatus;
means (22a) for setting a reception path assignment cycle, in accordance with the speed information obtained by said speed information obtaining means, at a predetermined timing, as regards said despreader (4); and
means (8b) for assigning a new reception path to said despreader (4), in accordance with a fact that from the time of the previous reception path assignment, the assignment cycle which has been set at the time by said assignment cycle setting means has passed.

13. A radio communication apparatus according to claim 12, characterized in that said speed information obtaining means (22b, 22c) measures a hand-over execution interval and generates information representing a result of the measurement as said speed information.

14. A radio communication apparatus according to claim 12, characterized in that said assignment cycle setting means (22a) sets the reception path assignment cycle to be a maximum value when the hand-over is not executed within a predetermined time.

15. A radio communication apparatus according to claim 12, characterized in that said assignment cycle setting means sets the reception path assignment cycle in proportion to the hand-over execution interval.

16. A radio communication apparatus according to claim 12, characterized in that said assignment cycle setting means sets the reception path assignment cycle to be longer as the hand-over execution interval is longer.

17. A radio communication apparatus according to claim 12, characterized by further comprising hand-over history storing means (21) for storing a variation in a hand-over destination as a hand-over history,
wherein said assignment cycle setting means (22a) determines whether the apparatus moves back and forth between two hand-over destinations or not, on the basis of the hand-over history stored in said hand-over history storing means, and sets a predetermined assignment cycle regardless of said speed information when the apparatus moves back and forth between the two hand-over destinations.

18. A radio communication apparatus according to claim 17, characterized in that said predetermined assignment cycle is a maximum assignment cycle.

19. A radio communication apparatus according to claim 12, characterized by further comprising hand-over history storing means (21) for storing a variation in a hand-over destination as a hand-over history,
wherein said assignment cycle setting means (22a) determines whether the apparatus moves back and forth between two hand-over destinations or not, on the basis of the hand-over history stored in said hand-over history storing means, and sets the same assignment cycle as a previous one regardless of said speed information

**EP 1 041 725 A2**

when the apparatus moves back and forth between the two hand-over, destinations.

20. A radio communication apparatus according to claim 12, characterized in that said assignment cycle setting means (22a) sets the reception path assignment cycle to be shorter, on the basis of said speed information, as the moving speed of the radio communication apparatus is higher.

21. A radio communication apparatus according to claim 12, characterized in that said speed information obtaining means measures a rate of variation in a transmission power and generates information representing a result of the measurement as said speed information.

22. A radio communication apparatus according to claim 12, characterized in that said speed information obtaining means generates said speed information on the basis of speed data obtained from a vehicle on which the radio communication apparatus is mounted.

**12**

FIG. 1A

FIG. 1B

FIG. 2A

FIG. 2B

FIG. 3

START

RESET TIMER ── ST1

ST2
HAS
t1 PASSED
?

NO →

ST3
HAS
COMMUNICATION BEEN
COMPLETED?

NO

YES

YES ↓

ST4
MEASURE MAGNITUDE OF
SIGNAL POWER RELATING TO
ONE RECEPTION PATH AFTER
DESPREDING

TERMINATE

ST5
DETERMINE (RECIPROCAL OF
RECEPTION PATH SIGNAL
POWER × COEFFICIENT) AS
PARAMETER OF RECEPTION
PATH SELECTION CYCLE

ST6
HAVE
THE PROCESSES BEEN
EXECUTED IN RELATION
TO ALL FINGERS
?

NO

YES

FIG. 4

```
                    ┌─────────────┐
                    │    START    │
                    └──────┬──────┘
                           │
   ┌───────────────────────┼──────────────────┐
   │         ┌─────────────▼─────────────┐
   │         │ UPDATE ASSIGNMENT CYCLE   │
   │         │ t2 OF RECEPTION PATH      │── ST11
   │         └─────────────┬─────────────┘
   │                       │
   │              ┌────────▼────────┐
   │              │  RESET TIMER    │── ST12
   │              └────────┬────────┘
   │                       │
   │                  ST13 │            ST14
   │                    ◆  │              ◆
   │                  ╱   ╲              ╱  HAS  ╲
   │                ╱  HAS  ╲   NO      ╱ COMMUNICATION BEEN ╲  NO
   │               ╱  t2 PASSED ╲─────▶╱    COMPLETED?      ╲───
   │                ╲    ?    ╱        ╲                    ╱
   │                  ╲     ╱            ╲                ╱
   │                    ◆                  ◆
   │               YES  │                  │ YES
   │    ┌───────────────▼──────────┐       │
   │    │ SELECT RECEPTION         │   ┌───▼─────────┐
   └────│ PATH AND ASSIGN TO       │   │ TERMINATE   │
        │ FINGER OF INTEREST       │── ST15
        └──────────────────────────┘
```

# FIG. 5

FIG. 6

FIG. 7

FIG. 8

START

RESET TIMER — ST31

ST32

HAS
t3 PASSED? — YES

ST39

PARAMETER OF RECEPTION
PATH SELECTION CYCLE IS
SET TO **MINIMUM**

NO

ST33

HAS
COMMUNICATION BEEN
COMPLETED
? — YES

TERMINATE

NO

ST34

HAS
HAND-OVER OCCURRED
? — YES

MEASURE INTERVAL
TIME WITH PREVIOUS
ST35 — HAND-OVER AND WRITE
IT IN HAND-OVER
HISTORY MEMORY

NO

UPDATE HAND-OVER
ST36 — HISTORY TO INCLUDE
CURRENT HAND-OVER
TARGET

ST37

DOES
APPARATUS MOVE BACK
NO — AND FORTH BETWEEN CELL
BOUNDARY?

ST38

DETERMINE (RECIPROCAL OF
HAND-OVER INTERVAL ×
COEFFICIENT) AS PARAMETER
OF RECEPTION PATH SELECTION
CYCLE

YES

FIG. 9